# EUROPEAN PATENT APPLICATION

(11) **EP 2 833 115 A1**
(43) Date of publication of application: **04.02.2015**
(21) Application number: 13770004.3
(22) Date of filing: 21.03.2013
(51) Int. Cl.: G01M 13/04

(54) **RAILROAD VEHICLE BEARING MALFUNCTION SENSING SYSTEM**

(30) Priority: 28.03.2012 JP 2012072864; 14.06.2012 JP 2012134533
(71) Applicant: NTN Corporation, Osaka-shi, Osaka 550-0003 (JP)
(72) Inventor: OOE, Hiroki, Kuwana-shi Mie 511-8678 (JP); ITOMI, Shoji, Kuwana-shi Mie 511-8678 (JP); TAKADA, Seiichi, Kuwana-shi Mie 511-8678 (JP); ITO, Hiroyoshi, Kuwana-shi Mie 511-8678 (JP)
(74) Representative: Behrmann, Niels
(86) International application number: PCT/JP2013/057982
(87) International publication number: WO 2013/146502

(57) **Abstract**

A railroad vehicle bearing malfunction sensing system is provided which is able to accurately determine a malfunction of an axle bearing in each vehicle of a train. The system includes: a plurality of data loggers (5) mounted on a plurality of axle bearings (3), respectively, in at least one vehicle (2) of a single-line train (1), each logger (5) including: a detection/recording (12) to detect vibration of the bearing (3) and record detected vibration detection data; and a wireless communication (13) to receive a recording start command for starting recording of the vibration detection data by the detection/recording (12); and a simultaneous recording start command (22) to simultaneously and wirelessly transmit recording start commands to the loggers (5) respectively corresponding to the bearings (3).

## Description

### CROSS REFERENCE TO THE RELATED APPLICATION

This application is based on and claims Convention priority to Japanese patent application No. 2012-072864, filed March 28, 2012, and Japanese patent application No. 2012-134533, filed June 14, 2012, the entire disclosures of which are herein incorporated by reference as a part of this application.

### BACKGROUND OF THE INVENTION

### (Field of the Invention)

The present invention relates to a railroad vehicle bearing malfunction sensing system that senses a malfunction of an axle bearing in a railroad vehicle.

### (Description of Related Art)

In a railroad vehicle, when a malfunction occurs in an axle bearing thereof, it is necessary to take measures such as stopping an operation of the vehicle. Thus, conventionally, a method may be used in which a thermo label which changes in color with temperature rise is attached to an axle bearing, and an operator visually confirms the color of the thermo label when a vehicle is stopped. However, with the thermo label, it is difficult to assuredly detect occurrence of a malfunction.

As a system that solves such a problem, a system has been proposed in which a temperature sensor is provided on an axle bearing and a detection signal of the temperature sensor is wirelessly transmitted and monitored on a monitor at a driver seat (e.g., Patent Document 1).

In addition, a system has been proposed in which an axle bearing is equipped with a temperature sensor, a vibration sensor, and an IC tag that records detection results of these sensors. Tag readers are provided beside a railway track and reads out data recorded in the IC tag when a vehicle passes nearby (e.g., Patent Document 2).

### [Prior Art Document]

### [Patent Document]

[Patent Document 1] JP Laid-open Patent Publication No. 10-217964
[Patent Document 2] JP Laid-open Patent Publication No. 2005-30589

### SUMMARY OF THE INVENTION

The malfunction sensing system of Patent Document 1 is excellent in that it is possible to monitor a malfunction of the axle bearing at the driver seat during running of a vehicle. However, detection of a bearing malfunction is not needed to such an extent that a bearing malfunction is monitored during running, and it is sufficient if detection of a bearing malfunction is performed only during maintenance of the vehicle when the vehicle is stopped. Therefore, the malfunction sensing system is excessive in its configuration and expensive as compared to its necessity, but the accuracy of malfunction detection is not quite sufficient since a malfunction determination is performed only on the basis of a temperature.

The malfunction sensing system of Patent Document 2 uses vibration detection for a malfunction determination, and thus the accuracy of determining a bearing malfunction is increased. However, since the tag readers are provided beside the railway track only for the purpose of detecting a bearing malfunction, the system includes excessive equipment. In addition, when a malfunction determination is performed on the basis of vibration detection data, it is necessary to accurately recognize a bearing rotational frequency or the number of revolution (= rotational speed) in order to perform frequency analysis or the like, but it is difficult to obtain a rotational frequency when vibration is detected.

An object of the present invention is to provide a railroad vehicle bearing malfunction sensing system that is able to accurately determine a malfunction of each axle bearing in each vehicle of a train and is able to accurately and easily recognize a rotational frequency of each axle bearing when vibration of each axle bearing is detected for performing the determination.

Hereinafter, for convenience of easy understanding, a description will be given with reference to the reference numerals in embodiments.

A railroad vehicle bearing malfunction sensing system according to one aspect of the present invention includes: a plurality of data loggers 5 mounted on a plurality of axle bearings 3, respectively, in at least one vehicle 2 of a single-line train 1 or mounted on members 4 supporting the axle bearings 3, respectively, each data logger including: a detection/recording unit 12 configured to detect vibration of the associated axle bearing 3 and record the detected vibration detection data; and a wireless communication unit 13 configured to receive a recording start command for starting recording of the vibration detection data by the detection/recording unit 12; and a simultaneous recording start command unit 22 configured to substantially simultaneously and wirelessly transmit recording start commands to the data loggers 5 respectively corresponding to any two or more axle bearings 3 out of a plurality of axle bearings in the train 1 or in the at least one vehicle 2 or a plurality of the axle bearings in a bogie 6 installed in the vehicle 2.

According to this configuration, since the vibration detection data for each axle bearing 3 is recorded in the data logger 5, it is possible to obtain a large amount of vibration detection data collected over a certain amount of time, and it is possible to accurately determine a malfunction on the basis of analysis of the vibration detection data. In order to analyze the vibration detection data, it is necessary to recognize a bearing rotational frequency. However, each data logger 5 includes the wireless communication unit 13, and recording start commands are simultaneously transmitted by the simultaneous recording start command unit 22 to the respective data loggers 5 of the single-line train 1. Thus, the data loggers 5 for all the axle bearings 3 are simultaneously commanded to start recording, so that the rotation frequencies of all the axle bearings 3 become equal to each other during the detection and recording. Each rotational frequency is obtained by calculation based on a wheel diameter of each vehicle 2 and the running speed of the vehicle 2. Thus, it is possible to also easily obtain each bearing rotational frequency used for analyzing the vibration detection data.

Each data logger 5 may be mountable on and dismountable from the axle bearing 3 or the member supporting the axle bearing 3.

Vibration detection for a determination as to a malfunction of each axle bearing 3 does not need to be performed at all times, and, for example, it is sufficient if, after end of daily service running, the vibration detection is performed in a premise for maintenance. Thus, since the data loggers 5 are mountable and dismountable, when the data loggers 5 are used in rotation for detecting a malfunction of the axle bearings 3 in each train 1 out of many trains 1, the required number of the data loggers 5 is small.

Preferably, the wireless communication unit 13 of each data logger 5 transmits the vibration detection data recorded by the detection/recording unit 12. Since the wireless communication unit 13 transmits the vibration detection data, it is possible to collect the vibration detection data of each data logger 5 provided to each of the many axle bearings 3 provided in the single-line train 1, without getting close to each data logger 5 and establishing connection to each data logger 5 via a wire, and hence the operability of inspection is improved.

In a preferred embodiment, a relay unit 20 may be allocated to each vehicle 2 and may receive, collect, and transmit the vibration detection data transmitted from the wireless communication units 13 of the data loggers 5 in associated the vehicle 2.

Useable radio field intensity is regulated by law, and it is difficult to set radio field intensity with which reception from the wireless communication units 13 of the data loggers 5 for all of the many axle bearings 3 provided in the train 1 is enabled at one location, in order to avoid size increase or cost increase of the wireless communication unit 13. For that reason, by allocating the relay units 20 to each train 1, a communication unit that is required to emit radio waves far needs to be provided only in each relay unit 20. Therefore, while required equipment is reduced, it is made possible to collect and read, at one location, signals recorded in the data loggers 5 for the respective axle bearings 3 of the train 1.

In a preferred embodiment, a detection signal of each data logger 5 may be transmitted by a portable information terminal (mobile information terminal) to a server for analyzing the detection signal. The portable information terminal is a general-purpose portable information terminal including a screen display unit and an operation system capable of installing at least one application program, such as a smartphone or a tablet type terminal. The application program installed in the portable information terminal includes, as one application program thereof, terminal-side processing software 50 configured to transmit a rotational frequency and the vibration detection data recorded in the data logger 5 to the server and receive and display, on the screen display unit, a result of analysis of the vibration detection data from the server.

Due to this configuration, it is possible to analyze the vibration detection data recorded in each data logger 5 by using an analysis function of the high-functional server, and thus it is possible to accurately determine a malfunction. In addition, by using the general-purpose portable information terminal 71, it is possible to transmit the vibration detection data to a server in a distant place via a public telephone network or a general computer communication network. For communication between the portable information terminal 71 and each data logger 5, it is possible to use a wireless LAN function of the portable information terminal 71.

The analysis of the detection signal of the data logger 5 may also be performed by the portable information terminal 71. In other words, the railroad vehicle bearing malfunction sensing system may include a general-purpose portable information terminal 71 including a screen display unit and an operation system capable of installing at least one application program, and the application program installed in the portable information terminal 71 may include, as one application program thereof, a data processing program 34 configured to analyze the vibration detection data recorded in the data logger 5 and determine presence/absence of a malfunction.

Due to high functionalization of a portable information terminal in recent years or further high functionalization thereof in the future, it is possible to realize that operations to the analysis of the vibration detection data are performed by the portable information terminal.

In a preferred embodiment, the railroad vehicle bearing malfunction sensing system may include a personal computer 71A including a data processing program 34B configured to analyze the vibration detection data recorded in the data logger 5 and determine presence/absence of a malfunction.

Due to the personal computer 71A caused to perform the analysis, it is possible to perform all operations from reading of the vibration detection data of the data logger 5 to the analysis thereof by means of a device at hand without performing communication via a public telephone network.

The data processing program 34B may be, for example, frequency analysis software configured to identify, from the vibration detection data and a rotational frequency of the axle bearing 3 during the vibration detection performed by the data logger 5, a frequency of vibration caused by the axle bearing 3 so as to identify a cause for the vibration. With the frequency analysis software, it is possible to easily identify a location of a malfunction in the axle bearing 3 and a cause for occurrence of the malfunction.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a block diagram showing a schematic configuration of a railroad vehicle bearing malfunction sensing system according to a first embodiment;
Fig. 2 is a perspective view showing an example of arrangement of a data logger with respect to an axle bearing which is a detection target of the malfunction sensing system in Fig. 1;
Fig. 3 is a cross-sectional view of the axle bearing which is the detection target of the malfunction sensing system in Fig. 1;
Fig. 4 is a schematic configuration diagram of a railroad vehicle bearing malfunction sensing system according to a second embodiment;
Fig. 5 is a schematic block diagram of the malfunction sensing system in Fig. 4;
Fig. 6 is a schematic block diagram of a modification of the malfunction sensing system in Fig. 4; and
Fig. 7 is a schematic configuration diagram of a railroad vehicle bearing malfunction sensing system according to a third embodiment.

### DESCRIPTION OF EMBODIMENTS

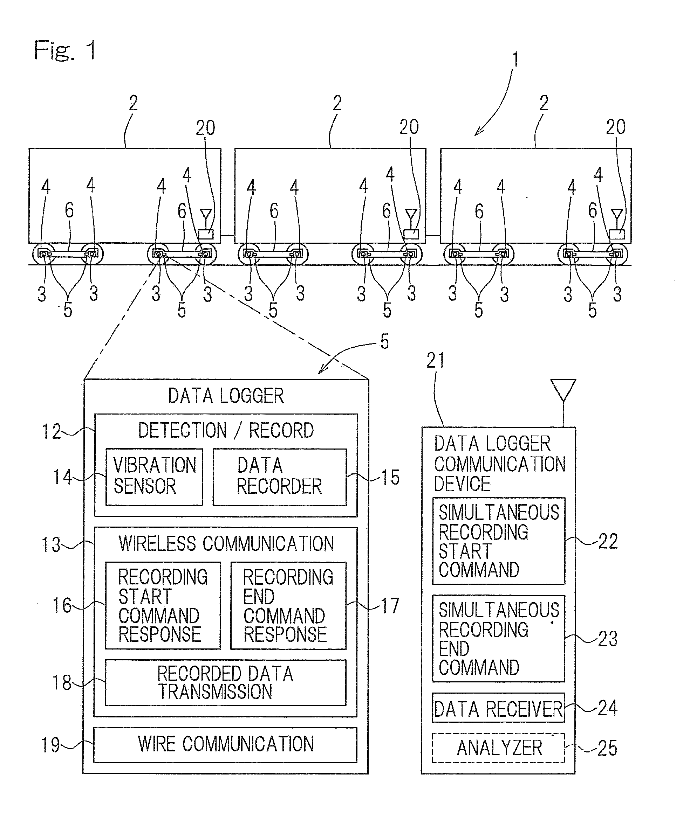

A railroad vehicle bearing malfunction sensing system according to a first embodiment of the present invention will be described with reference to Figs. 1 to 3. As shown in Fig. 1, a train 1 includes vehicles 2, each having axle bearings. On each axle box 4 that supports the axle bearing 3, a data logger 5 is detachably mounted. The data logger 5 is configured to detect and record vibration of the axle bearing 3. The data logger 5 is mounted with respect to each axle bearing 3 in the train 1. Each axle box 4 is mounted on a bogie 6 in the vehicle 2.

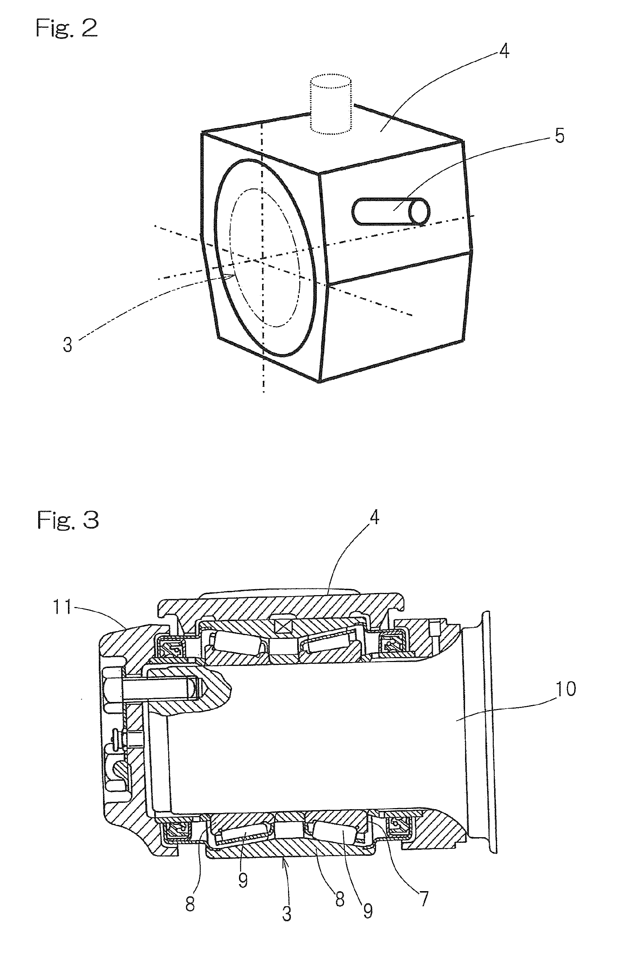

Specifically, as shown as an example in Fig. 3, each axle bearing 3 is composed of a double row tapered roller bearing in which rolling elements 9 are interposed in double rows between an inner ring 7 and an outer ring 8. The outer ring 8 is provided within the axle box 4. An axle end of an axle 10 is fitted to the inner periphery of the inner ring 7. An end surface of the axle 10 is covered with a front cover 11, and the axle bearing 3 cannot be viewed from the outside. However, in Fig. 1, for convenience of illustration, the axle bearing 3 is shown so as to be exposed.

A mechanism in which each data logger 5 is mounted on the axle box 4 includes, for example, a permanent magnet (not shown) provided to the data logger 5, in which the data logger 5 is attracted to the outer surface of the axle box 4 by a magnetic force. Alternatively, the mechanism may include a fit hole (not shown) for the data logger 5 provided in the axle box 4, in which the data logger 5 is fitted therein in a press-fit state or fastened thereto by means of a bolt. Each data logger 5 is dismounted and mounted each time the train 1 is checked, and thus is preferably mounted and dismounted as easily as possible. It should be noted that in this example, each data logger 5 is mounted on the axle box 4 but may be mounted on the axle bearing 3.

As shown in a block diagram in a Fig. 1, each data logger 5 is a wireless communication type vibration meter data logger and includes a detection/recording unit 12 configured to detect vibration and record detected vibration detection data, a wireless communication unit 13, a wire communication unit 19, and a power source (not shown) such as a battery. The detection/recording unit 12 includes a vibration sensor 14 and a data recording unit 15 such as a memory that records vibration detection data of the vibration sensor 14. The vibration sensor 14 is composed of an acceleration pickup or the like. In the detection/recording unit 12, start and end of vibration detection by the vibration sensor 14 and recording of the data recording unit 15 may be controlled on the basis of external signals.

The wireless communication unit 13 is configured to wirelessly communicate via radio, infrared rays, or the like with an external device with respect to the wireless communication unit 13, such as a data logger communication device 21, such that control of the detection/recording unit 12 and transmission of recorded data are performed through this communication. In this example, the wireless communication unit 13 has a radio communication function. The wireless communication unit 13 preferably conforms to a general near field wireless communication standard such as Bluetooth (registered trademark). The wireless communication unit 13 includes a recording start command response unit 16, a recording end command response unit 17, and a recorded data transmission unit 18.

Upon reception of a recording start command transmitted from the data logger communication device 21, the recording start command response unit 16 starts vibration detection by the vibration sensor 14 and recording of vibration detection data thereof by the data recording unit 15. In addition, upon reception of a new recording start command, the recording start command response unit 16 deletes data that has been recorded in the data recording unit 15, and records new vibration detection data therein.

Upon reception of a recording end command transmitted from the data logger communication device 21, the recording end command response unit 17 ends the vibration detection by the vibration sensor 14 and the recording of the vibration detection data thereof by the data recording unit 15. It should be noted that the recording end command response unit 17 may not be provided in the wireless communication unit 13, a timer (not shown) or the like may be provided therein, and after start of vibration detection, the vibration detection and recording of detection data thereof may be performed for a given detection time period. The given detection time period is, for example, about 1 minute, or several ten seconds to several minutes.

The recorded data transmission unit 18 is configured to respond to a request signal from the data logger communication device 21 and transmit vibration detection data recorded in the data recording unit 15.

The wire communication unit 19 is configured to be connected to an external device via a wire and includes an insertion-connection terminal that complies with the USB standard or the like and an interface unit for communication between: the insertion-connection terminal; and the detection/recording unit 12 and the wireless communication unit 13.

Wireless communication between each data logger 5 and the data logger communication device 21 may be directly performed, but in this example, a relay unit 20 is provided to each vehicle 2, the vibration detection data of the data loggers 5 of each vehicle 2 is collected by the relay unit 20 and transmitted from the relay unit 20 to the data logger communication device 21. In addition, a recording start command and a recording end command transmitted from the data logger communication device 21 are also delivered via the relay unit 20 to each data logger 5. Transmission of recording start commands from the data logger communication device 21 to all the data loggers 5 of all the vehicles 2 of the train 1 is simultaneously performed. Each relay unit 20 is a wireless communication device for relay that enables wireless communication with each data logger 5 and wireless communication with the data logger communication device 21, and the communication with the data logger communication device 21 is performed with higher radio field intensity than the communication with each data logger 5.

The data logger communication device 21 is a device that enables wireless communication with each data logger 5 directly or via the relay unit 20. The device 21 may be a computer such as a personal computer for analysis, may be a computer that serves as a server device for analysis, or may be a general-purpose portable information terminal such as a smartphone or a dedicated device that serves as a master device for a plurality of the data loggers 5.

The data logger communication device 21 includes a simultaneous recording start command unit 22, a simultaneous recording end command unit 23, and a data receiver 24. The simultaneous recording start command unit 22 simultaneously transmits commands for starting vibration detection and recording of vibration detection data thereof, to all the data loggers 5 of all the vehicles 2 of the train 1. The simultaneous recording end command unit 23 simultaneously transmits commands for ending the vibration detection and the recording of the vibration detection data thereof, to all the data loggers 5 of all the vehicles 2 of the train 1. In the case where each data logger 5 ends vibration detection and recording by means of a timer, the simultaneous recording end command unit 23 is not necessary. The data receiver 24 is configured to receive recorded vibration detection data from all the data loggers 5 of all the vehicles 2 of the train 1. The vibration detection data is received, for example, sequentially from each data logger 5. In the case where the relay units 20 are provided, data is received sequentially from each relay unit 20.

In the case where the data logger communication device 21 is a computer for analysis or a portable information terminal, the data logger communication device 21 is configured to include an analyzer 25 that analyzes received vibration detection data. In the case where the data logger communication device 21 is a portable information terminal, the data logger communication device 21 may have a function to transmit received vibration detection data to a server, instead of including the analyzer 25.

According to the malfunction sensing system having this configuration, since the vibration detection data for each axle bearing 3 is recorded in the data logger 5, it is possible to obtain a large amount of vibration detection data collected over a certain amount of time, so that it is possible to accurately determine a malfunction on the basis of analysis of the vibration detection data. In order to analyze the vibration detection data, it is necessary to recognize a bearing rotational frequency when vibration is detected. However, each data logger 5 includes the wireless communication unit 13, and recording start commands are simultaneously transmitted by the simultaneous recording start command unit 22 to the respective data loggers 5 of the single-line train 1. Thus, the data loggers 5 for all the axle bearings 3 are simultaneously commanded to start recording, so that the rotation frequencies of all the axle bearings 3 become equal to each other during the detection and recording. Each rotational frequency is obtained by calculation based on a wheel diameter of each vehicle 2 and the running speed of the vehicle 2. Thus, it is possible to also easily obtain each bearing rotational frequency used for analyzing the vibration detection data.

Since each data logger 5 is mountable on and dismountable from the axle box 4 as described above, the following advantages are obtained. Specifically, vibration detection for a determination as to a malfunction of each axle bearing 3 does not need to be performed at all times, and, for example, it is sufficient if, after end of daily service running, the train 1 is caused to run in a premise for maintenance in order to detect vibration. Thus, since the data loggers 5 are mountable and dismountable, when the data loggers 5 are used in rotation for detecting a malfunction of the axle bearings 3 in each train 1 out of many trains 1, the required number of the data loggers 5 is small. In other words, the number of the data loggers 5 is sufficient if it is equal to the number of the axle bearings 3 of the one train 1.

In addition, in this embodiment, the wireless communication unit 13 of each data logger 5 is enabled to transmit vibration detection data recorded in the detection/recording unit 12. Thus, it is possible to collect the vibration detection data of each data logger 5 provided to each of the many axle bearings 3 provided in the single-line train 1, without getting close to each data logger 5 and establishing connection to each data logger 5 via a wire, and hence the operability of inspection is improved.

In addition, in this embodiment, to each vehicle 2, the relay unit 20 is provided which receives, collects, and transmits the vibration detection data transmitted from the wireless communication units 13 of the data loggers 5. Useable radio field intensity is regulated by law, and it is difficult to set radio field intensity with which reception from the wireless communication units 13 of the data loggers 5 for all of the many axle bearings 3 provided in the train 1 is enabled at one location, in order to avoid size increase or cost increase of the wireless communication unit 13. For that reason, by providing the relay units 20 to each train 1, a communication unit that is required to emit radio waves far needs to be provided only in each relay unit 20. Therefore, while required equipment is reduced, it is made possible to collect and read, at one location, signals recorded in the data loggers 5 for the respective axle bearings 3 of the train 1.

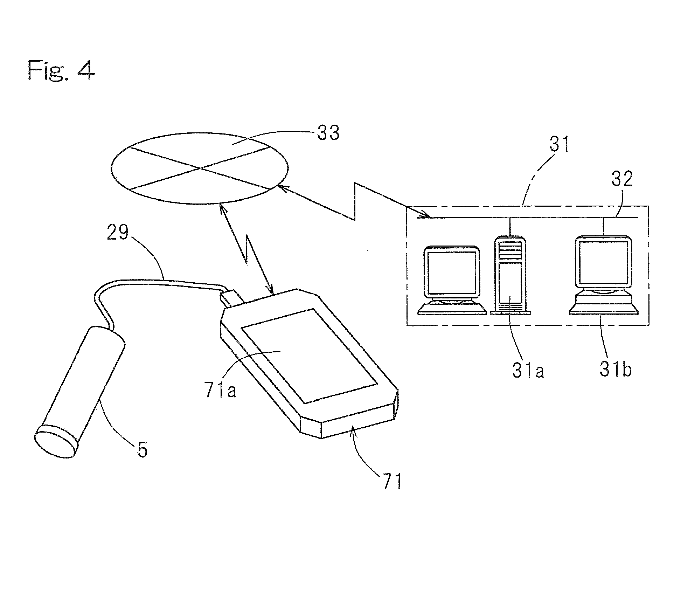

Fig. 4 shows a malfunction sensing system according to a second embodiment of the present invention. This embodiment is the same as the first embodiment shown in Figs. 1 to 3, except for matter to be described in particular, and an overlap description is omitted therein. In the present embodiment as well, recording start commands with respect to the data loggers 5 are simultaneously and wirelessly transmitted from the data logger communication device 21 to all the data loggers 5 in all the vehicles 2 of the train 1. Meanwhile, vibration detection data recorded in each data logger 5 is received by a portable information terminal 71 via a wire, not via wireless communication. Therefore, in the present embodiment, the vibration detection data is read out from each data logger 5 by the portable information terminal 71 that is different from the data logger communication device 21 which transmits a recording start command.

In this embodiment, the vibration detection data recorded in each data logger 5 is sent by the wire communication unit 19 (Fig. 1) which is an USB terminal or the like of the data logger 5, via a wire 29 to the portable information terminal 71. The portable information terminal 71 sends the received vibration detection data to a server 31 via a communication line network 33 such as a public telephone network or a computer network, and the server 31 performs analysis such as FFT analysis (fast Fourier analysis) of the vibration detection data. An analysis result such as presence/absence of a malfunction of the axle bearing 3 is sent back from the server 31 to the portable information terminal 71. The portable information terminal 71 displays the sent-back analysis result on a screen 71a. It should be noted that in the illustrated example, the server 31 includes a communication server 31a and an analyzer 31b that is a computer that performs FFT analysis and the like, and the communication server 31 a and the analyzer 31b are connected to each other via a local area network 32. The communication server 31a and the analyzer 31b may be composed of one computer.

In the present embodiment, the case where the vibration detection data is analyzed by the server 31 has been described, but data processing software for analysis may be downloaded by the portable information terminal 71 from the server 31, and the vibration detection data may be analyzed by the portable information terminal 71.

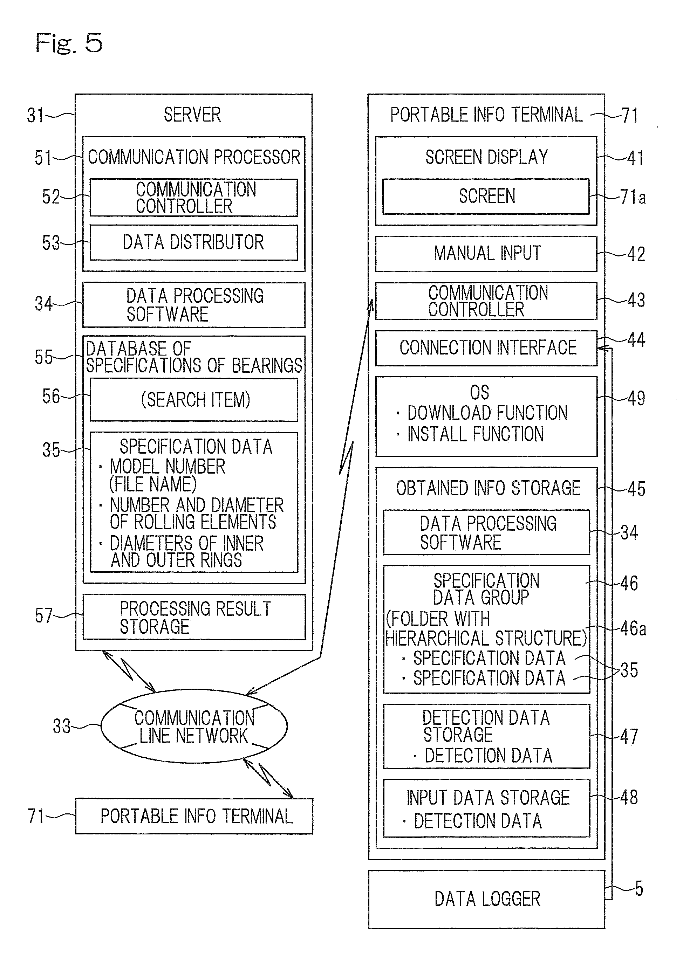

Next, a process of performing analysis by the portable information terminal 71 will be specifically described with reference to Fig. 5. It should be noted that in Fig. 5, illustration of a unit, of the portable information terminal 71, for communication with each data logger 5 is omitted. In this embodiment, data processing software 34 and specification data 35 of each axle bearing 3 which is an inspection target are downloaded from the server 31 to the portable information terminal 71, and detection data detected by each data logger 5 is processed within the portable information terminal 71 and displayed on the screen 71a.

The portable information terminal 71 is a smartphone, a tablet, or the like and may not necessarily have a telephone function, but is an information processing device that is connectable to the server 31 via a wide-area communication line network 33 such as a telephone network, the Internet, or the like and has an OS (operation program) 49 that is able to download and install an application program. In the definition of the portable information terminal 71, the smartphone refers to a portable information terminal having a telephone function. The communication line network 33 is a line network through which mobile communication can be performed.

The data processing software 34 is a program and data for causing the portable information terminal 71 to perform data processing for inspecting each axle bearing 3, and is an application program to be executed on the OS (operation program) of the portable information terminal 71. The data processing software 34 constitutes the analyzer 25 (Fig. 1) and is downloadable from the server 31 to the portable information terminal 71 via the communication line network 33 and installed in the portable information terminal 71. The data processing software 34 has, for example, a processing function to: perform frequency analysis of bearing vibration detection data; detect a vibration level and compare the vibration level to a threshold; determine that a malfunction has occurred, if the vibration level exceeds the threshold, and display on the screen 71a of the portable information terminal 71 that the malfunction has occurred; and determine that no malfunction has occurred, if the vibration level is less than the threshold, and display on the screen 71a that no malfunction has occurred. In performing the malfunction determination, the data processing software 34 may determine that a malfunction has occurred, if a condition determined on the basis of comparison of time-sequential processing results is met even when the vibration level is equal to or less than the threshold, and may display the determination result on the screen 71a of the portable information terminal 71.

The specification data 35 of each axle bearing 3 is, for example, the number of rolling elements, the diameter of the rolling element diameter, the diameter of a pitch circle of the rolling elements, the ball race diameters of the inner and outer rings, and the like. A model number of each axle bearing 3 may the number that is associated with the specification of the axle bearing 3, which is referred to a bearing name or a bearing number (a bearing designation). Alternatively, the model number may be the number determined for each axle bearing 3, which is referred to a production number.

The server 31 is an information processing device configured to store the data processing software 34 and the specification data 35 for each model number of the axle bearing 3 and distribute the data processing software 34 and the specification data 35 via the communication line network 33 in response to the access from the portable information terminal 71. The server 31 may be a dedicated server for use in the railroad vehicle bearing malfunction sensing system, or may be a server having a further function to distribute various application programs and data that are irrelevant to the malfunction sensing system.

The server 31 includes a communication processor 51, a storage (not shown) that has stored therein the data processing software 34, and a database 55 for the specifications of the respective axle bearings 3. The communication processor 51 includes a communication controller 52 and a data distributor 53. The communication processor 51 is configured to respond to access from the portable information terminal 71 via the communication line network 33, establish communication therewith, and perform various controls regarding the communication. The data distributor 53 is configured to distribute the data processing software 34 and the specification data 35 of each axle bearing 3 in response to access from the portable information terminal 71. The data distributor 53 may distribute the data processing software 34 only when a dedicated number assigned to each data logger 5 is correctly inputted from the portable information terminal 71.

The database 55 includes: a database management system (not shown) that is searchable through access from the portable information terminal 71; and a data storage, and has a name obtained by hierarchically classifying each axle bearing 3 as a search item 56. The search item 56 is classified into: a level classified into taper roller bearing, cylindrical roller bearing, and other types of bearings; a level classified by size; and a level classified by presence/absence of a seal and a seal type. The search item 56 may have a plurality of types of levels having different forms of classification. Specification data 35 for one model number in a lowest level is provided as a file. The database 55 allows a plurality of specification data 35 to be extracted as a folder with various levels. In addition, the data distributor 53 is able to distribute the plurality of specification data 35 extracted from the database 55, as the folder.

In addition to the above respective elements, the server 31 may include a processing result storage 57 configured to store a processing result obtained by processing with the data processing software 34 by the portable information terminal 71. The processing result storage 57 is provided, for example, as a database, and may be configured to also store the specification data 35 processed with the data processing software 34, data obtained from each data logger 5, identification data of the portable information terminal 71, and the like. In addition, the data processing software 34 may have a function to compare a plurality of the processing results, a function to cause the processing result to be stored in the processing result storage 57 of the server 31, and a function to search the processing result storage 57 with an appropriate search condition and download the stored processing result. By the portable information terminal 71, the plurality of the processing results may be compared using the above comparison function. By comparing the plurality of the processing results, it is possible to perform further appropriate inspection and evaluation of an inspection result.

The configuration of the portable information terminal 71 will be specifically described. The portable information terminal 71 is a smartphone, a tablet, or the like and includes the OS 49 that is able to download and install an application program, a screen display unit 41, a manual input unit 42, a communication controller 43, a connection interface 44, and an input information storage 45.

The screen display unit 41 is configured to display an image on the screen 71a, such as a liquid crystal display. The manual input unit 42 is a unit in order for an operator to manually perform an input (an interface for an input by the operator), and is composed of a hardware keyboard for inputting characters and numbers, a software keyboard that enables an input to be performed by a finger, a touch pen, or the like touching the screen 71a, or the like. The communication controller 43 is configured to perform communication with the server 31 via the communication line network 33 and perform various processing. The connection interface 44 is an interface for connecting the portable information terminal 71 to another device. In this embodiment, the connection interface 44 is composed of an insertion-connection terminal complying with the micro USB standard, and a circuit and software for input/output processing thereof.

The input information storage 45 is configured to store detection data of the associated data logger 5 inputted via the server 31, the manual input unit 42, or the connection interface 44. The data processing software 34 is inputted and installed in the input information storage 45 so as to be executable, and the specification data (data regarding specifications) 35 downloaded from the server 31 is stored in the input information storage 45 as a specification data group 46 including a folder with a hierarchical structure. The detection data obtained from the associated data logger 5 is stored in a detection data storage section 47 of the input information storage 45, and various data inputted from the manual input unit 42, such as a bearing rotational speed or the like, is stored in an input data storage section 48.

A portable-terminal-using inspection method for the axle bearing will be described. The portable information terminal 71 is a smartphone. First, the portable information terminal 71 accesses the server 31 and receives the specification data (also referred to as "internal data") of the bearing to be inspected and the data processing software 34 from the server 31. The server 31 transmits the specification data of the bearing to be inspected and the data processing software 34, which is an application program required for inspection, to the portable information terminal 71.

The portable information terminal 71 calculates a vibration frequency of each component (an inner ring, an outer ring, a rolling element, a retainer) of the bearing on the basis of the rotational speed of the bearing inputted from the manual input unit 42. The calculation of the vibration frequency of each component (the inner ring, the outer ring, the rolling element, the retainer) of the bearing and a display on the screen 71a for a guide to cause the rotational speed for the calculation to be inputted are performed by the data processing software 34.

Thereafter, bearing vibration detection data is inputted from the data logger 5 to the portable information terminal 71, and the portable information terminal 71 performs FFT analysis (frequency analysis) of the bearing vibration detection data by means of the data processing software 34 and detects a vibration level of the vibration frequency of each component of the bearing on the basis of the FFT analysis result. In other words, the portable information terminal 71 obtains numerical data of the vibration level. The portable information terminal 71 compares the detected vibration level to a threshold. If the detected vibration level exceeds the threshold, the portable information terminal 71 determines that a malfunction has occurred, and displays on the screen 71a that the malfunction has occurred in a portion (any one of the above inner ring, the above outer ring, the above rolling element, and the above retainer) at which the vibration level exceeds the threshold. If each detected vibration level does not exceed the threshold, the portable information terminal 71 determines that no malfunction has occurred in the bearing, and displays that no malfunction has occurred, on the screen 71a by using characters, a pictogram, a symbol, or the like.

By the portable information terminal 71 determining a malfunction on the basis of the detection data and performing display as described above, it is possible to easily recognize whether a malfunction has occurred in the axle bearing 3. The above phrase "if a condition determined on the basis of comparison of time-sequential processing results is met even when the vibration level is equal to or less than the threshold" corresponds to, for example, the case where numerical data that is the processing results of the detection data for a plurality of times continuously exceeds a reference value that is equal to or less than the threshold, or the case where such numerical data frequently exceeds the reference value (i.e., the numerical data for a predetermined number or more of times, out of the plurality of times, exceeds the reference value). The reference value is such a value that if the numerical data that is the processing result of the detection data exceeds the reference value only once, it cannot be determined that a malfunction has occurred, but if the numerical data continuously or frequently exceeds the reference value as described above, it can be determined that a malfunction has occurred. By comparing the time-sequential processing results as described above, it is possible to further assuredly detect a malfunction.

According to the malfunction sensing system, as described above, the general-purpose portable information terminal 71 is used as a unit configured to perform data processing and display a result thereof, and downloads the data processing software 34 and the specification data 35 of the axle bearing 3 from the server 31. Thus, by merely preparing a data logger 5 and further using the popularized portable information terminal 71 such as a smartphone, a tablet, or the like as for the rest, it is possible to easily inspect an operating state of the axle bearing 3. Each axle bearing 3 is a rolling bearing, an operating state of the rolling bearing appears as vibration or a temperature, and thus it is possible to detect the operating state by the data logger 5 detecting vibration. In particular, in the case of a rolling bearing, through detection of vibration, it is possible to detect data based on which a malfunction determination, a life determination, or the like can be appropriately performed.

In the first and second embodiments, each data logger 5 detects vibration but may detect both vibration and a temperature. Where detection is performed by the data processing software 34 using both vibration and a temperature, it is possible to further accurately perform a malfunction determination. Furthermore, each data logger 5 may detect another condition in addition to or instead of a temperature.

Communication between the portable information terminal 71 and the server 31 may be performed from the portable information terminal 71 directly via the communication line network 33 such as an off-premise telephone network or the like, but the portable information terminal 71 may connect to the server 31 from the off-premise communication line network 33 via a premise LAN or the like.

In the first and second embodiments described above, the data processing software 34 may be provided from a portable storage medium (not shown) such as a USB memory or an SD card to the portable information terminal 71A instead of being downloaded from the server thereto, and installed in the portable information terminal 71 A.

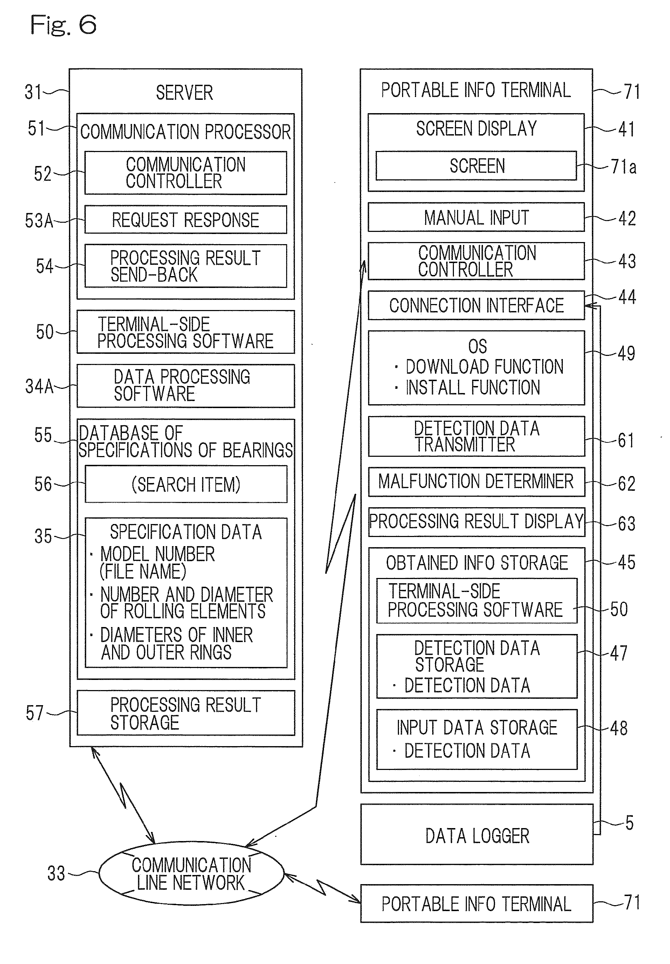

Fig. 6 shows an example of an analysis process in the portable information terminal 71 of the malfunction sensing system according to the second embodiment, which example is different from Fig. 5. In this example, data processing software 34A and the bearing specification database 55 stored in the server 31 are not for transmission to the portable information terminal 71 but for processing in the server 31. The server 31 includes, as part of the communication processor 51 or independently of the communication processor 51, a request response unit 53A that is configured to respond to a request from the portable information terminal 71. The request response unit 53A causes data processing with the data processing software 34A to be performed in response to a request for data processing from the portable information terminal 71. The processing result is sent back to the portable information terminal 71 by a processing result sending-back unit 54. The server 31 has stored therein terminal-side processing software 50 as software to be distributed to the portable information terminal 71. Then, the request response unit 53A transmits the terminal-side processing software 50 to the portable information terminal 71 in response to a transmission request from the portable information terminal 71. It should be noted that the data processing software 34A to be executed by the server 31 is also configured to perform, for example, FFT analysis (frequency analysis) and detect a vibration level of a vibration frequency of each component of the bearing on the basis of the FFT analysis result. Alternative to via communication, the terminal-side processing software 50 may be loaded from a portable storage to the portable information terminal 71.

The terminal-side processing software 50 is software for: processing of transmitting the detection data that is detected by the data logger 5 and supplied to the portable information terminal 71, to the server 31 and causing the server 31 to perform data processing; and the like. The terminal-side processing software 50 is installed in the portable information terminal 71, that is, is made executable in the portable information terminal 71, thereby constituting a detection data transmitter 61, a processing result display unit 63, and a malfunction determiner 62 in the portable information terminal 71.

An inspection method by the malfunction sensing system according to this embodiment will be described. First, as a preparing process, the portable information terminal 71 requests the server 31 to transmit the terminal-side processing software 50 thereto. In response to the transmission request, the server 31 transmits the terminal-side processing software 50 to the portable information terminal 71. The portable information terminal 71 installs the downloaded terminal-side processing software 50 to make the terminal-side processing software 50 executable.

In inspection, detection data inputted from the data logger 5 to the portable information terminal 71, the model number of the axle bearing 3 inputted from the manual input unit 42 or the like, and data of a rotational frequency or the number of revolution (= rotational speed) at inspection in the axle bearing 3 which is obtained by the data logger 5 are transmitted from the portable information terminal 71 to the server 31. The data of the rotational frequency may be data inputted from the manual input unit 42, or may be data obtained from a rotation detector (not shown).

The server 31 processes the received detection data with the data processing software 34A using the specification data 35 for each model number and the rotational frequency, and sends the processing result back to the portable information terminal 71 by the processing result sending-back unit 54. The portable information terminal 71 displays the sent-back processing result on the screen 71a.

In the case of this embodiment, since the detection data is processed by the server 31, it is necessary to transmit the detection data from the portable information terminal 71 thereto. However, the server 31 generally has a considerably higher speed processing function as compared to the portable information terminal 71, thus is able to process the detection data at a high speed by using the high speed processing function, and it is possible to perform high-level processing and perform more detailed diagnosis with high accuracy. The other advantageous effects are the same as those of the aforementioned analysis process.

Also in the case of the method in which data processing is performed by the server 31, a processing result obtained by data processing with the data processing software 34A may be stored in the portable information terminal 71, and a plurality of processing results may be compared. The comparison of the processing results is performed by the terminal-side processing software 50, namely, by the malfunction determiner 62.

In addition, also in the case of the method in which data processing is performed by the server 31, numerical data may be obtained as a processing result obtained by the data processing; if the numerical data exceeds a threshold associated with the model number, or if a condition determined on the basis of comparison of time-sequential processing results is met even when the numerical data is equal to or less than the threshold, it may be determined that a malfunction has occurred; and the determination result may be displayed on the screen of the portable information terminal 71 by the processing result display unit 63 or the like.

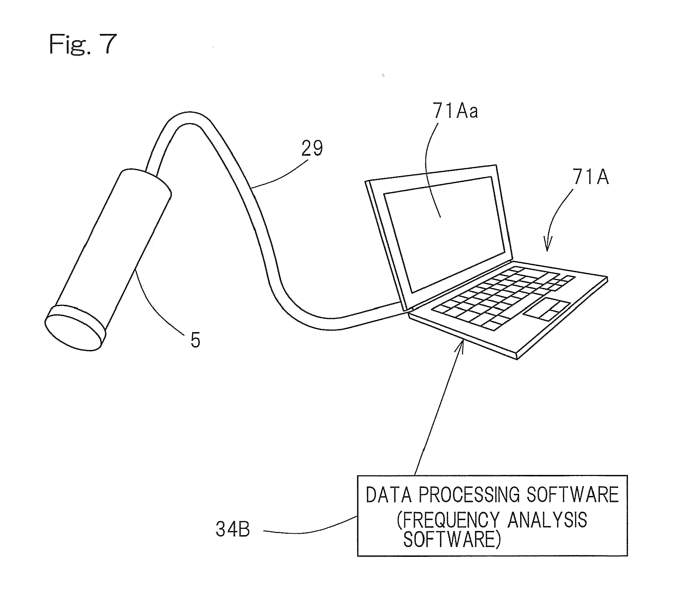

Fig. 7 shows a malfunction sensing system according to a third embodiment of the present invention. This embodiment is the same as the first embodiment and/or the second embodiment, except for matter to be described in particular, and an overlap description is omitted therein. The malfunction sensing system according to the present embodiment includes a personal computer 71A instead of the portable information terminal in the malfunction sensing system according to the second embodiment. Specifically, the personal computer 71A receives vibration detection data recorded in each data logger 5, via a wire, not via wireless communication. The vibration detection data recorded in each data logger 5 is sent by the wire communication unit 19 (Fig. 1) such as a USB terminal or the like of the data logger 5 via the wire 29 to the personal computer 71 A. The personal computer 71A analyzes the received vibration detection data and displays an analysis result on a screen 71Aa.

Although the preferred embodiments have been described above with reference to the drawings, those skilled in the art will readily conceive various changes and modifications within the framework of obviousness upon the reading of the specification herein presented of the present invention. Accordingly, such changes and modifications are to be construed as included in the scope of the present invention as delivered from the claims annexed hereto.

### [Reference Numerals]

- 1:: train
- 2:: vehicle
- 3:: axle bearing
- 4:: support member
- 5:: data logger
- 6:: bogie
- 12:: detection/recording unit
- 13:: wireless communication unit
- 22:: simultaneous recording start command unit

## Claims

1. A railroad vehicle bearing malfunction sensing system comprising:
a plurality of data loggers mounted on a plurality of axle bearings, respectively, in at least one vehicle included in a single-line train or mounted on members supporting the axle bearings, respectively, each data logger including:
a detection/recording unit configured to detect vibration of the associated axle bearing and record the detected vibration detection data; and
a wireless communication unit configured to receive a recording start command for starting recording of the vibration detection data by the detection/recording unit; and
a simultaneous recording start command unit configured to simultaneously and wirelessly transmit recording start commands to the data loggers respectively corresponding to any two or more axle bearings out of a plurality of axle bearings in the train or in the at least one vehicle or a plurality of the axle bearings in a bogie installed in in the vehicle.

2. The system as claimed in claim 1, wherein each data logger is mountable on and dismountable from the axle bearing or the member supporting the axle bearing.

3. The system as claimed in claim 1, wherein the wireless communication unit of each data logger transmits the vibration detection data recorded by the detection/recording unit.

4. The system as claimed in claim 3, further comprising a relay unit allocated to each vehicle, the relay unit receiving, collecting, and transmitting the vibration detection data transmitted from the wireless communication units of the data loggers in the associated vehicle.

5. The system as claimed in claim 1, further comprising:
a general-purpose portable information terminal including a screen display unit and an operation system capable of installing at least one application program; and
a server connected to the portable information terminal via a communication line network, wherein
the application program installed in the portable information terminal includes terminal-side processing software configured to transmit a rotational frequency and the vibration detection data recorded in the data logger to the server and receive and display, on the screen display unit, a result of analysis of the vibration detection data from the server.

6. The system as claimed in claim 1, further comprising a general-purpose portable information terminal including a screen display unit and an operation system capable of installing at least one application program, wherein
the application program installed in the portable information terminal includes data processing software configured to analyze the vibration detection data recorded in the data logger and determine presence/absence of a malfunction.

7. The system as claimed in claim 1, further comprising a personal computer including data processing software configured to analyze the vibration detection data recorded in the data logger and determine presence/absence of a malfunction.

8. The system as claimed in claim 6, wherein the data processing software includes frequency analysis software configured to obtain, from the vibration detection data and a rotational frequency of the axle bearing during the vibration detection performed by the data logger, a frequency of vibration caused by the axle bearing so as to identify a cause for the vibration.
